(19) Europäisches Patentamt
European Patent Office
Office européen des brevets

(11) **EP 1 882 321 B1**

(12) **EUROPÄISCHE PATENTSCHRIFT**

(45) Veröffentlichungstag und Bekanntmachung des Hinweises auf die Patenterteilung:
**31.10.2012 Patentblatt 2012/44**

(51) Int Cl.:
*H04B 17/00* (2006.01)     *H03F 1/32* (2006.01)
*G01R 27/28* (2006.01)

(21) Anmeldenummer: **06724294.1**

(22) Anmeldetag: **12.04.2006**

(86) Internationale Anmeldenummer:
**PCT/EP2006/003394**

(87) Internationale Veröffentlichungsnummer:
**WO 2006/122615 (23.11.2006 Gazette 2006/47)**

(54) **VERFAHREN UND SYSTEM ZUR ERMITTLUNG DER AMPLITUDE UND/ODER PHASE DES AUSGANGSSIGNALS EINES ÜBERTRAGUNGSGLIEDES IN ABHÄNGIGKEIT DER AMPLITUDE DES EINGANGSSIGNALS**

METHOD AND SYSTEM FOR DETERMINING THE AMPLITUDE AND/OR PHASE OF THE OUTPUT SIGNAL FOR A TRANSMISSION BODY DEPENDING ON THE AMPLITUDE OF THE INPUT SIGNAL

PROCEDE ET SYSTEME POUR DETERMINER L'AMPLITUDE ET/OU LA PHASE DU SIGNAL DE SORTIE D'UN ELEMENT DE TRANSMISSION EN FONCTION DE L'AMPLITUDE DU SIGNAL D'ENTREE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **19.05.2005 DE 102005023112**
**10.08.2005 DE 102005037880**

(43) Veröffentlichungstag der Anmeldung:
**30.01.2008 Patentblatt 2008/05**

(73) Patentinhaber: **Rohde & Schwarz GmbH & Co. KG**
**81671 München (DE)**

(72) Erfinder: **LORENZEN, Rolf**
**82008 Unterhaching (DE)**

(74) Vertreter: **Körfer, Thomas**
**Mitscherlich & Partner**
**Patent- und Rechtsanwälte**
**Postfach 33 06 09**
**80066 München (DE)**

(56) Entgegenhaltungen:
**WO-A-03/043182      WO-A-2006/056344**
**DE-A1- 19 813 703    US-A1- 2002 168 023**

## Beschreibung

Die Erfindung betrifft ein Verfahren und ein System zur Ermittlung der Amplitude und/oder Phase des Ausgangssignals eines Übertragungsgliedes in Abhängigkeit der Amplitude des Eingangssignals (AM-AM- und AM-PM-Kennlinie).

Nachrichtentechnische Übertragungsglieder, beispielsweise Verstärker in der Empfangs- oder Sende-Einheit eines Mobilfunkgerätes, weisen ein nichtlineares Übertragungsverhalten auf. Dieses nichtlineare Übertragungsverhalten führt zu unerwünschten Amplituden- und Phasenverzerrungen des zu verstärkenden Signals. Zur Kompensation dieser unerwünschten Verzerrungseffekte wird bekannterweise in Serie zum nichtlinearen Übertragungsgliedes ein Entzerrungsnetzwerk geschaltet, dessen Kennlinie idealerweise invers zur nichtlinearen Übertragungskennlinie des Übertragungsgliedes ausgeprägt ist.

Für die Auslegung der Kennlinie des Entzerrungsnetzwerkes wird folglich die Amplitude und die Phase des Ausgangssignals des Übertragungsgliedes in Abhängigkeit der Amplitude des Eingangssignals (AM-AM- und AM-PM-Kennlinie) benötigt. Die Bestimmung der Amplituden-Kennlinie des Übertragungsgliedes ergibt sich aus dem funktionalen Zusammenhang der Amplitude bzw. der Leistung des Signals am Ausgang des Übertragungsgliedes in Abhängigkeit von der Amplitude bzw. der Leistung des korrespondierenden Signals am Eingang des Übertragungsgliedes in einem definierten Amplituden- bzw. Leistungsbereich des Signals am Eingang des Übertragungsgliedes. Die Phasen-Kennlinie des Übertragungsgliedes wiederum stellt den funktionalen Zusammenhang der Phasenänderung des Signals zwischen Ausgang und Eingang des Übertragungsgliedes in Abhängigkeit von der Amplitude bzw. Leistung des Signals am Eingang des Übertragungsgliedes in einem definierten Amplituden- bzw. Leistungsbereich des Signals am Eingang des Übertragungsgliedes dar.

In der WO 99/05784 A1 ist ein Verfahren und eine Vorrichtung zur Messung der Amplituden- und Phasenverzerrung eines Hochfrequenz-Leistungsverstärkers beschrieben. Über Synchrondemodulatoren wird hierbei jeweils das Signal am Eingang und am Ausgang des Hochfrequenz-Leistungsverstärkers gemessen. Zur Darstellung der Amplitudenkennlinie wird das Verhältnis der Eingangs- zur Ausgangsamplitude bzw.- Leistung ermittelt, während zur Darstellung der Phasenkennlinie aus der Inphase- und Quadraturkomponente des Ausgangssignals der zur jeweiligen Amplitude bzw. Leistung des Signals am Eingang gehörige Phasenwert ermittelt wird. Durch Vorgabe eines bestimmten Signalverlaufs am Eingang des Hochfrequenz-Leistungsverstärkers mittels Signalgenerator wird der gesamte Verlauf der Amplituden- und Phasenkennlinie bestimmt. Die Synchronisierung zwischen dem Signal am Eingang und am Ausgang des Hochfrequenz-Leistungsverstärkers erfolgt über ein Referenzträgersignal zwischen den einzelnen Synchrondemodulatoren.

Bei der Kalibrierung von Leistungsverstärkern in Empfangs- und/oder Sendeeinheiten von Mobilfunkgeräte ist die in der WO 99/05784 A1 beschriebene Vorgehensweise der Messung zweier Signale - am Eingang und am Ausgang des Leistungsverstärkers - und der zusätzlichen nötigen Synchronisierung der beiden Signale zu zeit- und zu funktionsaufwändig.

US 2002/0168023 und WO 03/043182 beschreiben Testverfahren für Verstärker und nichlineare Bauteile.

Der Erfindung liegt deshalb die Aufgabe zugrunde, ein Verfahren und ein System zur Ermittlung der Amplitude und/oder Phase des Ausgangssignals eines Übertragungsgliedes in Abhängigkeit der Amplitude des Eingangssignals zu schaffen, das im Hinblick auf minimale Prozesszeit und maximale Prozesssicherheit optimiert ist.

Die Aufgabe der Erfindung wird durch ein Verfahren zur Ermittlung der Amplitude und/oder Phase des Ausgangssignals eines Übertragungsgliedes in Abhängigkeit der Amplitude des Eingangssignals mit den Merkmalen nach Anspruch 1 und durch ein System zur Ermittlung der Amplitude und/oder Phase des Ausgangssignals eines Übertragungsgliedes in Abhängigkeit der Amplitude des Eingangssignals mit den Merkmalen nach Anspruch 12 gelöst. Vorteilhafte Weiterbildungen der Erfindung sind in den abhängigen Ansprüchen aufgeführt.

Beim erfindungsgemäßen Verfahren und beim erfindungsgemäßen System zur Ermittlung der Amplitude und/oder Phase des Ausgangssignals eines Übertragungsgliedes in Abhängigkeit der Amplitude des Eingangssignals wird erfindungsgemäß nur noch das Signal am Ausgang des Übertragungsgliedes gemessen. Das Signal, das am Eingang des Übertragungsgliedes eingeprägt und nicht mehr gemessen wird, muß folglich bekannt sein und sollte im Hinblick auf die korrekte Ermittlung der Amplituden- und Phasen-Kennlinie des Übertragungsgliedes bezüglich Zeit, Frequenz und Phase mit dem Signal am Eingang des Übertragungsgliedes synchronisiert sein und somit keine Zeit-, Frequenz- und/oder Phasen-Offsets aufweisen.

Ein dem System bekanntes Signal am Eingang des Übertragungsgliedes wird erreicht, indem vom Anwender über eine Einheit zur übergeordneten Ablaufsteuerung einer Sende-Einheit zur Erzeugung des Signals am Eingang des Übertragungsgliedes ein bekanntes Testsignal vorgegeben wird.

Ein Zeit-Offset zwischen dem Signal am Eingang des Übertragungsgliedes und dem aus dem Testsignal durch Amplituden- und Phasenverzerrung im Übertragungsglied hervorgegangenen Antwortsignal am Ausgang des Übertragungsgliedes wird durch Verwendung eines Testsignals umgangen, das anstelle eines kontinuierlichen zeitverlaufs einen Zeitverlauf mit mehreren Verlaufsabschnitten aufweist, die jeweils einen konstanten Amplitudenverlauf mit voneinander abweichenden Amplitudenwerten besitzen. Wird in jedem dieser Verlaufsabschnitte des Testsignals nach Einstellung des jeweiligen Amplitudenwertes durch den Signalgenerator des Testsignals ein bestimmtes Unsicherheitsintervall abgewartet, so kann ohne Durchführung einer zeitsynchronisierung der Amplitudenwert des Antwortsignals gemessen werden und zum eingestellten Amplitudenwert des Testsignals im Hinblick auf eine korrekte AM-AM-Kennlinie in Beziehung gesetzt werden, da fortan stationäre Verhältnisse am Eingang und am Ausgang des Übertragungsgliedes herrschen. Auch die Messung des Phasenwertes des Antwortsignals zur Bestimmung der AM-PM-Kennlinie kann ohne Durchführung einer Zeitsynchronisierung erfolgen, da in guter Näherung die Phase des Antwortsignals während eines Verlaufsabschnittes als konstant betrachtet werden kann und somit auch in diesem Fall stationäre Verhältnisse am Eingang und am Ausgang des Übertragungsgliedes herrschen.

Über mehrere Verlaufsabschnitte des Testsignals kann sich aber - unter der Annahme einer fehlenden Phasenverzerrung aufgrund eines konstanten Amplitudenverlaufs des Testsignals - die Phase des Antwortsignals infolge einer Phasendrift ändern. Diese Phasendrift wird bei der Ermittlung der AM-PM-Kennlinie dadurch kompensiert, daß die am Ausgang des Übertragungsgliedes für den jeweiligen Amplitudenwert des Testsignals am Eingang des Übertragungsgliedes gemessene Phase des Antwortsignals erfindungsgemäß zu einer Referenzphase in Bezug gesetzt wird. Hierzu wird ein Testsignal generiert, das aus ersten Verlaufsabschnitten mit jeweils zueinander veränderten Amplitudenwerten im Wechsel mit zweiten Verlaufsabschnitten mit jeweils zueinander unveränderten Amplitudenwerten zusammengesetzt ist. Wird erfindungsgemäß jeweils die Differenz zwischen in einem ersten Verlaufsabschnitt gemessenen Phasenwerts des Antwortsignals und des im darauf folgenden zweiten Verlaufsabschnitt gemessenen Phasenwerts des Antwortsignals gebildet, so ist die somit gewonnene Phasendifferenz unter der Voraussetzung einer Phasendrift, die zwischen einem ersten und einem darauf folgenden zweiten Verlaufsabschnitt näherungsweise unverändert ist, von der störenden Phasendrift befreit. Auf Grund der unveränderten Amplitude des Testsignals über alle zweiten Verlaufsabschnitte sind die amplitudenabhängigen Phasenverzerrungen des Antwortsignals in allen zweiten Verlaufsabschnitten konstant und ermöglichen eine Phasenreferenzierung, die von der amplitudenabhängigen Phasenverzerrung entkoppelt ist.

Der Phasenverlauf des Antwortsignals kann innerhalb der einzelnen Verlaufsabschnitte des Testsignals aufgrund eines Frequenz-Offsets im Antwortsignal nachteilig nicht konstant sein, sondern linear ansteigend verlaufen. Zur Kompensation dieses durch einen Frequenz-Offset im Antwortsignal verursachten Phasenfehlers des Antwortsignals wird in jedem einzelnen Verlaufsabschnitt des Testsignals nach bekannten Verfahren des Stand der Technik der jeweils auftretende Frequenz-Offset geschätzt. Aus den je Verlaufsabschnitt des Testsignals jeweils geschätzten Frequenz-Offsets wird über eine Mittelwertbildung ein für den gesamten Phasenverlauf des Antwortsignals geltender, gemittelter Frequenz-Offset berechnet, indem die einzelnen Frequenz-Offsets zusätzlich mit den zugehörigen Amplitudenwerten des Testsignals gewichtet werden. Diese Gewichtung der einzelnen Frequenz-Offsets mit den zugehörigen Amplitudenwerten des Testsignals berücksichtigt die präzisere Schätzung des Frequenz-Offsets in Verlaufsabschnitten mit höheren Amplitudenwerten des Testsignals aufgrund eines dort herrschenden besseren Signal-Rausch-Abstands.

Ein Ausführungsbeispiel des erfindungsgemäßen Verfahrens zur Messung der Amplituden- und Phasen-Charakteristik eines Übertragungsgliedes und des erfindungsgemäßen Systems zur Messung der Amplituden- und Phasen-Charakteristik eines Übertragungsgliedes wird im folgenden unter Berücksichtigung der Zeichnung näher erläutert. In der Zeichnung zeigen:

Fig. 1        ein Blockschaltbild eines zu kalibrierenden Polar-Modulators für ein Mobilfunkgerät,

Fig. 2        ein Blockschaltbild eines erfindungsgemäßen Systems zur Messung der AM-AM- und der AM-PM-Kennlinie eines Übertragungsgliedes,

Fig. 3        ein Fehlermodell für Synchronisierfehler bei der Kalibrierung eines Polar-Modulators für ein Mobilfunkgerät,

Fig. 4        ein Flußdiagramm eines erfindungsgemäßen Verfahrens zur Messung der AM-AM- und der AM-PM-Kennlinie eines Übertragungsgliedes,

Fig. 5        ein Zeitdiagramm des Amplituden- und Phasenverlaufs des Testsignals und des Antwortsignals,

Fig. 6A, 6B    ein Zeitdiagramm der Amplitudenwerte des Testsignals zur Bestimmung der AM-AM- und der AM-PM-Kennlinie eines Übertragungsgliedes und

Fig. 7A, 7B    ein Zeitdiagramm der Phasenwerte des Antwortsignals mit einem Phasenfehler aufgrund der Überlagerung von AM-PM-Verzerrung und Phasendrift, mit einem Phasenfehler aufgrund einer Phasendrift und mit einem Phasenfehler aufgrund von AM-PM-Verzerrung.

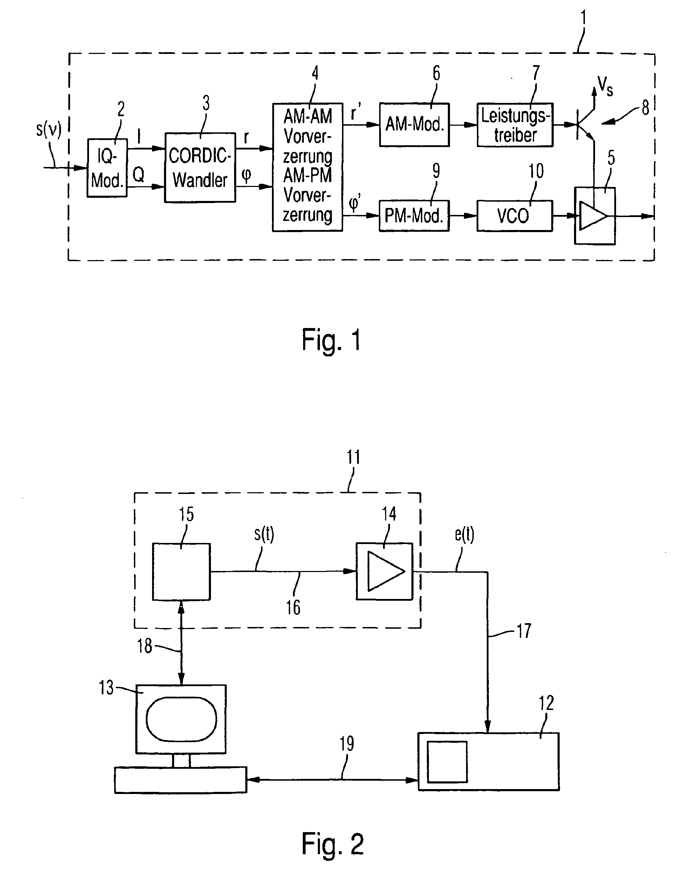

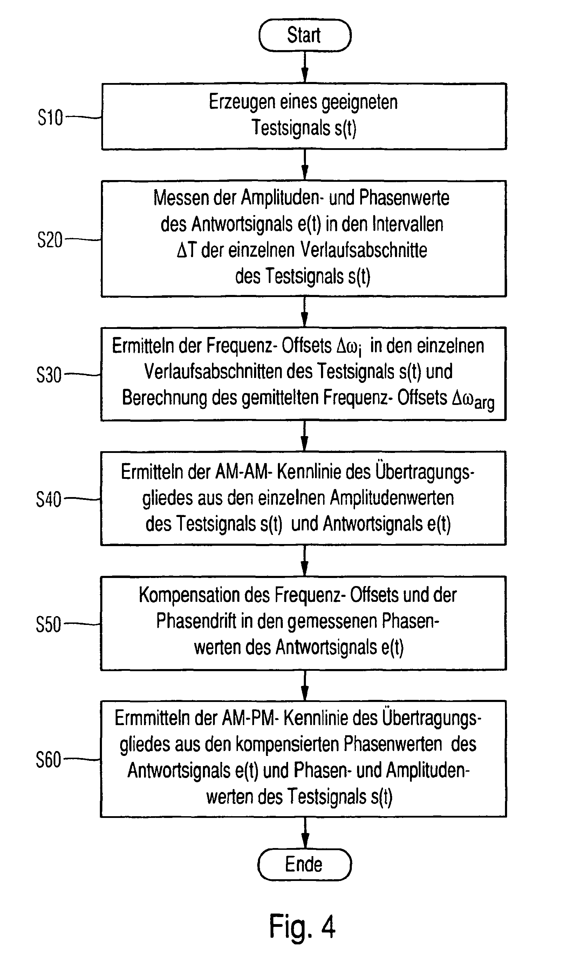

Bevor anhand von Fig. 2 und Fig. 4 das erfindungsgemäße System und das erfindungsgemäße Verfahren zur Ermittlung der Amplituden- und Phasen-Charakteristik eines allgemeinen Übertragungsgliedes beschrieben wird, wird zuerst anhand von Fig. 1 die Struktur bzw. Funktionsweise eines Polar-Modulators für ein Mobilfunkgerät vorgestellt, dessen Kalibrierung als bevorzugter Anwendungsfall des erfindungsgemäßen Verfahrens und des erfindungsgemäßen Systems zur Messung der Amplituden- und Phasen-Kennlinie eines Übertragungsgliedes gilt.

Der Polar-Modulator 1 wird von einer Signalquelle, die in Fig. 1 nicht dargestellt ist, mit einer zu übertragenden Symbolfolgen s(v) beaufschlagt. Ein IQ-Modulator 2 erzeugt aus der Symbolfolgen s(v) mit Hilfe eines Trägersignals die Inphase- und Quadraturkomponenten I und Q eines vom Mobilfunkgerät zu sendenden Quadratursignals. Über einen CORDIC-Wandler 3 erfolgt eine Konvertierung der Inphase- und Quadratur-Komponente I und Q des Quadratursignals in dazu korrespondierende Amplituden- und Phasenkomponenten r und φ (Polarkoordinaten) des zu übertragenden Signals.

In einer nachfolgende Vorverzerrungseinheit 4 erfolgt eine getrennte Vorverzerrung der Amplituden-Komponente r und der Phasen-Komponente φ. Durch die Vorverzerrung wird eine im nachfolgenden Leistungsverstärker 5 verursachte Amplituden- und Phasenverzerrung des zu übertragenden Signals kompensiert und somit ein zu übertragendes Signal im Polar-Modulator 1 erzeugt, das idealerweise keine Amplituden- und Phasen-Verzerrung aufweist.

Die vorverzerrte Amplituden-Komponente r' wird anschliessend in einem Amplituden-Modulator 6 im wesentlichen über einen multiplizierenden Digital-Analog-Wandler in den für die Ansteuerung eines nachfolgenden Leistungstreibers 7 erforderlichen Pegelbereich gewandelt. Der Leistungstreiber 7 steuert einen Leistungstransistor 8 an, der von einer Spannungsquelle $V_s$ versorgt wird und als externe Leistungsendstufe des Leistungsverstärker 5 dient.

Parallel zum Amplituden-Modulationspfad wird die vorverzerrte Phasenkomponente φ' einem Phasen-Modulator 9 in einem Phasen-Modulationspfad zugeführt. Der Phasen-Modulator 9 erzeugt aus der Phasen-Komponente φ' ein Signal, das der Frequenz der zeitlich rotierenden Phasen-Komponente φ' entspricht und als Frequenz-Sollwert für einen nachfolgenden spannungsgesteuerten Frequenzoszillator (VCO) 10 dient. Das vom spannungsgesteuerten Frequenzoszillator 10 erzeugte Frequenzsignal wird dem Leistungsverstärker 5 zugeführt und hinsichtlich seiner Amplituden in dem als Leistungsendstufe dienenden Leistungstransistor 8 verstärkt und am Ausgang des Leistungsverstärker 5 zu der Antenne des Mobilfunkgerätes weitergeleitet.

Für die Vorverzerrung der Amplituden-Komponente r und der Phasen-Komponente φ des zu sendenden Signals in der Vorverzerrung-Einheit 4 ist die Amplituden-Vorverzerrungskennlinie (AM-AM-Vorverzerrungskennlinie) und die Phasen-Vorverzerrungskennlinie (AM-PM-Vorverzerrungskennlinie) zu ermitteln, die bei idealer Vorverzerrung jeweils invers zur Amplituden-Verzerrungskennlinie (AM-AM-Verzerrungskennlinie) und Phasen-Verzerrungskennlinie (AM-PM-Verzerrungskennlinie) des Leistungsverstärker 5 ist. Somit ist für einen verzerrungsfreien Betrieb des Polar-Modulators 1 des Mobilfunkgerätes die Bestimmung der Amplituden- und Phasen-Charakteristik des Leistungsverstärker 5 im Rahmen eines Kalibrierungsvorgangs des Mobilfunkgerätes zu ermitteln.

Im folgenden wird ausgehend von einem Leistungsverstärker 5 eines Polar-Modulators 1 für ein Mobilfunkgerät gemäß Fig. 1 ein erfindungsgemäßes System zur Ermittlung der Amplituden- und Phasen-Kennlinie eines allgemeinen Übertragungsgliedes in Fig. 2 vorgestellt.

Das erfindungsgemäße System besteht aus einem zu kalibrierenden Meßobjekt (device under test = DUT) 11, das dem Polar-Modulator 1 des Mobilfunkgerätes in Fig. 1 entspricht, einem Meßgerät 12 und einer Einheit zur übergeordneten Ablaufsteuerung 13, die beispielsweise durch einen Personalcomputer realisiert ist. Das zu kalibrierende Meßobjekt (DUT) 11 besteht wiederum aus einem Übertragungsglied 14, das dem Leistungsverstärker 5 des Polar-Modulators 1 in Fig. 1 entspricht, mit einer im allgemeinen nichtlinearen Amplituden- und Phasen-Kennlinie.

Das Übertragungsglied 14 wird von einer Sende-Einheit 15, die in Summe den Funktionseinheiten 2, 3, 4, 6, 7, 8, 9 und 10 des Polar-Modulators 1 in Fig. 1 entspricht, über die unidirektionale Verbindungsleitung 16 mit einem Testsignal s(t) beaufschlagt, das aus einer Amplituden-Komponente |s(t)| und einer Phasen-Komponente $φ_s$ (t) besteht, und liefert ein entsprechend seiner Amplituden- und Phasen-Kennlinie verzerrtes Antwortsignal e(t), das aus einer Amplituden-Komponente |e(t)| und einer Phasen-Komponente $φ_E$(t) besteht, über die unidirektionale Verbindungsleitung 17 an das Meßobjekt 12. Die Einheit zur übergeordneten Ablaufsteuerung 13 kommuniziert über die bidirektionale Verbindungsleitung 18 mit der Sende-Einheit 15 und über die bidirektionale Verbindungsleitung 19 mit dem Meßgerät 12.

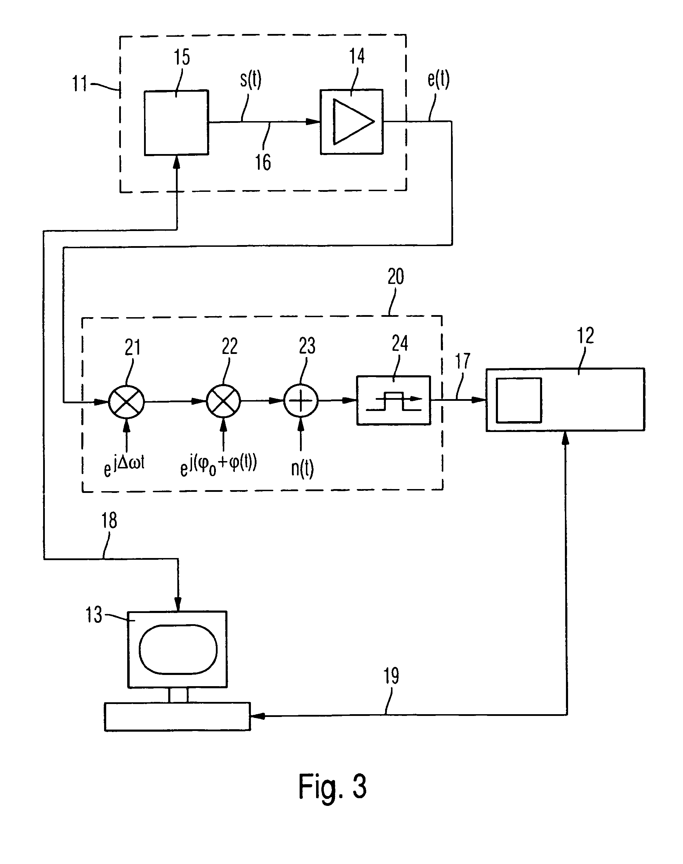

In Fig. 3 ist ein Fehlermodell 20, das mit Ausnahme der AM-AM- und AM-PM-Verzerrungen alle für die Kalibrierung des Übertragungsgliedes 14 zu berücksichtigenden Fehler beinhaltet, in Serie zum kalibrierenden Übertragungsglied 14 des erfindungsgemäßen Systems zur Ermittlung der Amplituden- und Phasen-Kennlinie eines allgemeinen Übertragungsgliedes 14 geschaltet.

Über das Multiplizierglied 21 wird dem Antwortsignal e(t) im Fehlermodell 20 ein Term $e^{j\Delta\omega \cdot t}$ überlagert, der einen Frequenz-Offset $\Delta\omega$ aufgrund fehlender Frequenzsynchronisierung in der Kalibrierung modelliert. Im anschließenden Multiplizierglied 22 des Fehlermodells 20 wird dem Antwortsignal e(t) ein Term $e^{-j(φ0+φ(1))}$ überlagert, der eine Anfangsphase $φ_0$ und eine Phasendrift φ aufgrund fehlender Phasensynchronsierung in der Kalibrierung modelliert. Das anschließende Addierglied 23 des Fehlermodells 20 überlagert dem Antwortsignal e(t) ein Rauschsignal n(t). Schließlich wird im abschließenden Zeitverzögerungsglied 24 des Fehlermodells 20 ein Zeitverzug zwischen Sendesignal s(t) und Antwortsignal e(t) aufgrund fehlender Zeitsynchronisierung in der Kalibrierung modelliert.

Im folgenden wird anhand von Fig. 4 das erfindungsgemäße Verfahren zur Messung der AM-AM- und der AM-PM-Kennlinie eines Übertragungsgliedes 14 beschrieben. Hierbei wird insbesondere auf die zur korrekten Messung der AM-AM- und der AM-PM-Kennlinie des Übertragungsgliedes erforderlichen Zeit-, Frequenz- und Phasensynchronisierung eingegangen.

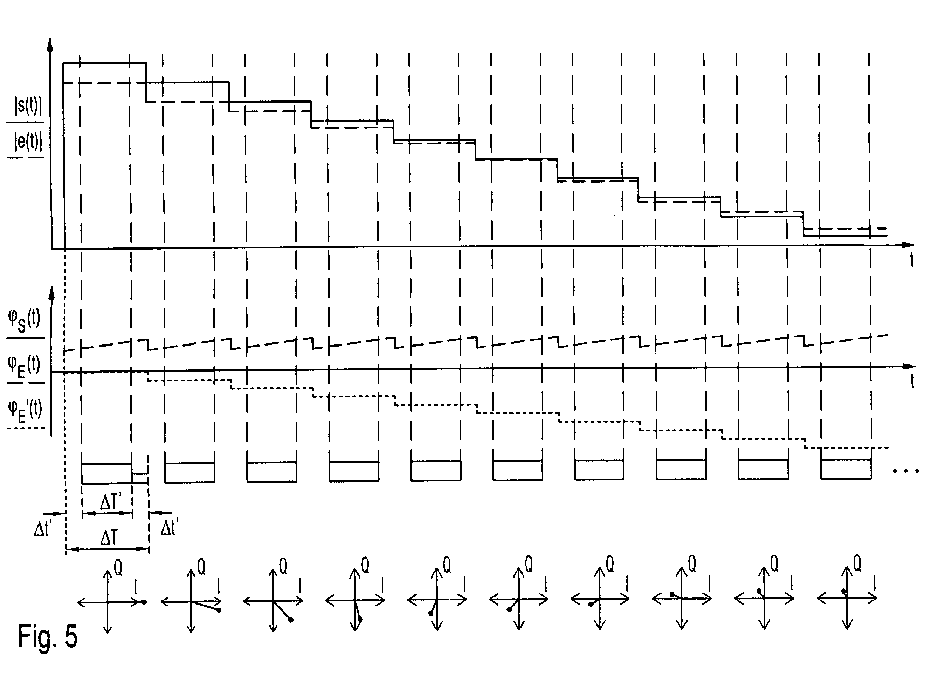

In Verfahrensschritt S10 des erfindungsgemäßen Verfahrens zur Messung der AM-AM- und der AM-PM-Kennlinie eines Übertragungsgliedes 14 wird von der Sende-Einheit 15 ein Sendesignal s(t) erzeugt. Dieses Sendesignal s(t) weist gemäß Fig. 5 - oberes Zeitdiagramm - einen Amplitudenverlauf |s(t)| auf, der durch stückweise konstante Verlaufsabschnitte - in Fig. 5 beispielsweise eine "abfallende Treppenfunktion" - gekennzeichnet ist. Im unteren Zeitdiagramm der Fig. 5 ist der Phasenverlauf $\varphi_s(t)$ des Sendesignal s(t) dargestellt, der erfindungsgemäß über alle Verlaufsabschnitte des Sendesignals s(t) einen konstanten und identischen Wert - durchgezogene Linie in Fig. 5 mit dem beispielhaften Wert Null - aufweist.

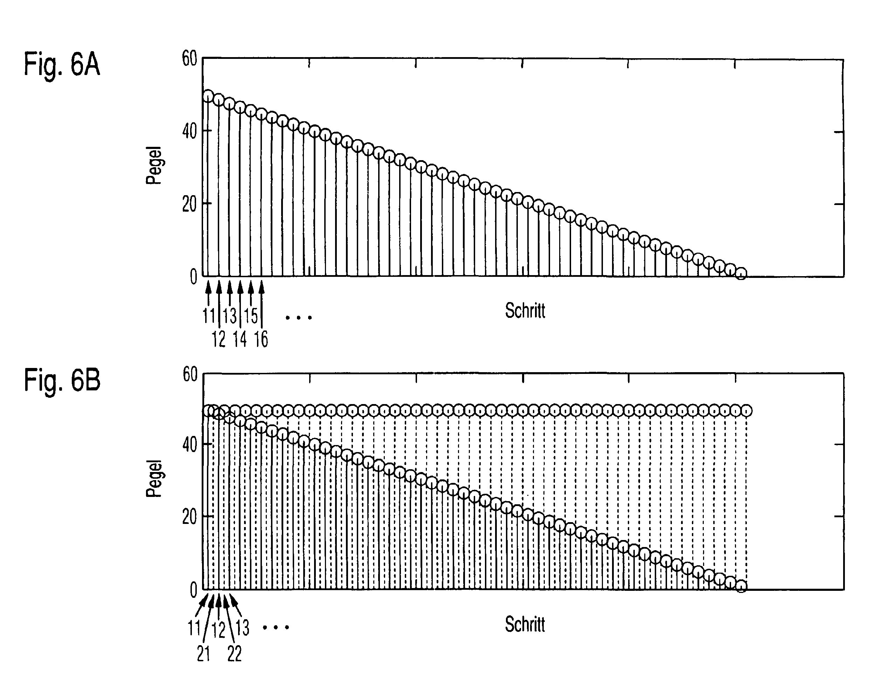

Erfindungsgemäß weist der Amplitudenverlauf |s(t)| des Sendesignals s(t) gemäß Fig. 6A erste Verlaufsabschnitte 1i der Länge $\Delta T$ mit zueinander veränderten Amplitudenwerten $|s_{1i}|$ auf. Mit einem Sendesignal s(t), das einen Amplitudenverlauf |s(t)| gemäß Fig. 6A aufweist, kann aufgrund der zueinander veränderten Amplitudenwerte $|s_{1i}|$ die AM-AM-Kennlinie des Übertragungsgliedes 14 ermittelt werden. Zur Ermittlung der AM-PM-Kennlinie des Übertragungsgliedes 14 wird erfindungsgemäß ein Amplitudenverlauf |s(t)| des Sendesignals s(t) gemäß Fig. 6B benutzt. Dieser besteht ebenfalls aus stückweise konstanten Verlaufsabschnitten $\Delta T$, enthält aber im Wechsel zu ersten Verlaufsabschnitten 1i mit zueinander veränderten Amplitudenwerten $|s_{I1}|$ - durchgezogene Linie in Fig. 6B - zweite Verlaufsabschnitte 2i mit zueinander unveränderten Amplitudenwerten $|s_{2i}|$ - gestrichelte Linie in Fig. 6B -. Um für eine korrekte Messung der AM-AM- und AM-PM-Kennlinie erste und zweite Verlaufsabschnitte mit jeweils konstanten Amplitudenwerten $|S_{1i}|$ und $|S_{2i}|$ zu garantieren, wird am Beginn jedes ersten und zweiten Verlaufsabschnittes 1i bzw. 2i jeweils ein bestimmtes Unsicherheitsintervall $\Delta t'$ abgewartet, bis in einem darauffolgenden Intervall $\Delta T'$ nach einem transienten Einschwingvorgang der Sende-Einheit 15 stationäre Verhältnisse am Eingang des Übertragungsgliedes 14 herrschen.

Im darauffolgenden Verfahrensschritt S20 werden während der Intervalle $\Delta T'$ der ersten und zweiten Verlaufsabschnitte 1i und 2i des Sendesignals s(t) die jeweiligen Amplitudenwerte $|e_{1i}|$ und $|e_{2i}|$ und Phasenwerte $\varphi_{E1i}$ und $\varphi_{E2i}$ des Antwortsignals e(t) gemessen. Gemäß Fig. 5 weist der Amplitudenverlauf |e(t)| des Antwortsignals e(t) - gestrichelte Linie im oberen Zeitdiagramm der Fig. 5 - in den ersten und zweiten Verlaufsabschnitten 1i und 2i des Sendesignals s(t) zumindest im Bereich der Intervalle $\Delta T'$ konstante Verlaufsabschnitte mit den zugehörigen Amplitudenwerten $|e_{1i}|$ und $|e_{2i}|$ auf.

Der Phasenverlauf $\varphi_E(t)$ des Antwortsignals e(t) im unteren Zeitdiagramm der Fig. 5 weist im Falle eines überlagerten Frequenz-Offsets $\Delta\omega$ in den ersten und zweiten Verlaufsabschnitten 1i und 2i des Sendesignals s(t) jeweils einen linear ansteigenden Phasenverlauf - gestrichelte Linie im unteren Zeitdiagramm der Fig. 5 - auf, während im Falle einer Kompensation des überlagerten Frequenz-Offsets $\Delta\omega$ der Phasenverlauf $\varphi_E(t)$ des Antwortsignals e(t) in der ersten und zweiten Verlaufsabschnitten 1i und 2i des Sendesignals s(t) jeweils einen konstanten Phasenverlauf - gepunktete Linie im unteren Zeitdiagramm der Fig. 5 - besitzt. Die Unstetigkeiten im Phasenverlauf $\varphi_E(t)$ des Antwortsignals e(t) an den Übergängen zwischen den ersten und zweiten Verlaufsabschnitten 1i und 2i des Sendesignals s(t) resultieren aus der Amplitudenwertsänderung des Sendesignals an den Übergängen und der Abhängigkeit der Phase $\varphi_E(t)$ des Antwortsignals e(t) von der Amplitude |s(t)| des Sendesignals s(t) entsprechend der AM-PM-Kennlinie des Übertragungsgliedes 14.

Der Verfahrensschritt S30 beinhaltet die Schätzung des Frequenz-Offsets $\Delta\omega_i$ in den einzelnen ersten und zweiten Verlaufsabschnitten 1i und 2i des Antwortsignals e(t) nach Verfahren des Stands der Technik, auf die in dieser Ausführung nicht näher eingegangen werden muss. Da die Schätzung der einzelnen Frequenz-Offsets $\Delta\omega_{1i}$ bzw. $\Delta\omega_{2i}$ jeweils mit einem statistischen Schätzfehler beaufschlagt ist, wird zur Kompensation des Frequenz-Offsets $\Delta\omega$ im Phasenverlauf $\varphi_E(t)$ aus allen geschätzten Frequenz-Offsets $\Delta\omega_{1i}$ bzw. $\Delta\omega_{2i}$ ein gemittelter Frequenz-Offset $\Delta\omega_{avg}$ berechnet, der für alle ersten und zweiten Verlaufsabschnitte 1i und 2i des Antwortsignals e(t) im folgenden benutzt wird. Hierzu wird gemäß Gleichung (1) jeder geschätzte Frequenz-Offset $\Delta\omega_{1i}$ bzw. $\Delta\omega_{2i}$ in einem der ersten und zweiten Verlaufsabschnitte 1i und 2i des Antwortsignals e(t) mit dem zugehörigen Amplitudenwert $|e_{1i}|$ oder $|e_{2i}|$ des Antwortsignals e(t) gewichtet.

$$\Delta\omega_{avg} = \frac{1}{\sum_{i=1}^{N}\left(|e_{1i}| + |e_{2i}|\right)} \cdot \sum_{i=1}^{N}\left(\Delta\omega_{1i} \cdot |e_{1i}| + \Delta\omega_{2i} \cdot |e_{2i}|\right) \qquad (1)$$

Im darauffolgenden Verfahrensschritt S40 wird für jeden der ersten und zweiten Verlaufsabschnitte 1i und 2i des Sendesignals s(t) aus dem Verhältnis der Amplitudenwerte $|S_{1i}|$ bzw. $|S_{2i}|$ des Sendesignals s (t) zu den Amplitudenwerten $|e_{1i}|$ bzw. $|e_{2i}|$ des Antwortsignals e(t) die AM-AM-Kennlinie des Übertragungsgliedes 14 ermittelt.

In Verfahrensschritt S50 erfolgt eine Kompensation eines in den einzelnen ersten und zweiten Verlaufsabschnitten 1i und 2i des gemessenen Phasenverlaufs $\varphi_E(t)$ des Antwortsignals e(t) jeweils vorhandenen Frequenz-Offset $\Delta\omega_{1i}$ oder $\Delta\omega_{2i}$ durch Kompensation des gesamten Phasenverlaufs $\varphi_E$ (t) des Antwortsignals e(t) mit dem in Verfahrensschritt S40 ermittelten mittleren Frequenz-Offset $\Delta\omega_{avg}$ (Überführung der gestrichelten in die gepunktete Linie der Fig. 5). Die in den ersten und zweiten Verlaufsabschnitten 1i und 2i somit jeweils emittelten Frequenz-Offset-kompensierten Phasenwerte $\varphi_{E1i}'$ und $\varphi_{E2i}'$ des Antwortsignals e(t) werden in Verfahrensschritt S50 zusätzlich von einer eventuell auftretenden Phasendrifts $\varphi_i$ bereinigt. Hierzu wird eine Phasenreferenzierung durch Bildung einer Phasendifferenz $\varphi_{Ei}''$ zwischen dem Frequenz-Offset-kompensierten Phasenwert $\varphi_{E1i}'$ des Antwortsignals e(t) in einem ersten Verlaufsabschnitt 1i des Sendesignals s(t) und dem Frequenz-Offset-kompensierten Phasenwert $\varphi_{E2i}'$ des Antwortsignals e(t) im darauffolgenden zweiten Verlaufsabschnitt 2i des Sendesignals s(t) gemäß Gleichung (2) berechnet.

Da eine im Phasenverlauf $\varphi_E(t)$ des Antwortsignals e(t möglicherweise auftretende Phasendrift $\varphi(t)$, die zwischen zwei benachbarten ersten und zweiten Verlaufsabschnitten 1i und 2i des Sendesignals s(t) jeweils näherungsweise unverändert ist, sind die jeweils berechneten Phasendifferenzen $\varphi_{Ei}''$ zwischen zwei benachbarten ersten und zweiten Verlaufsabschnitten 1i und 2i von einer Phasendrift $\varphi_i$ befreit.

$$\varphi_{Ei}'' = \varphi_{E2i}' - \varphi_{E1i}' \qquad\qquad (2)$$

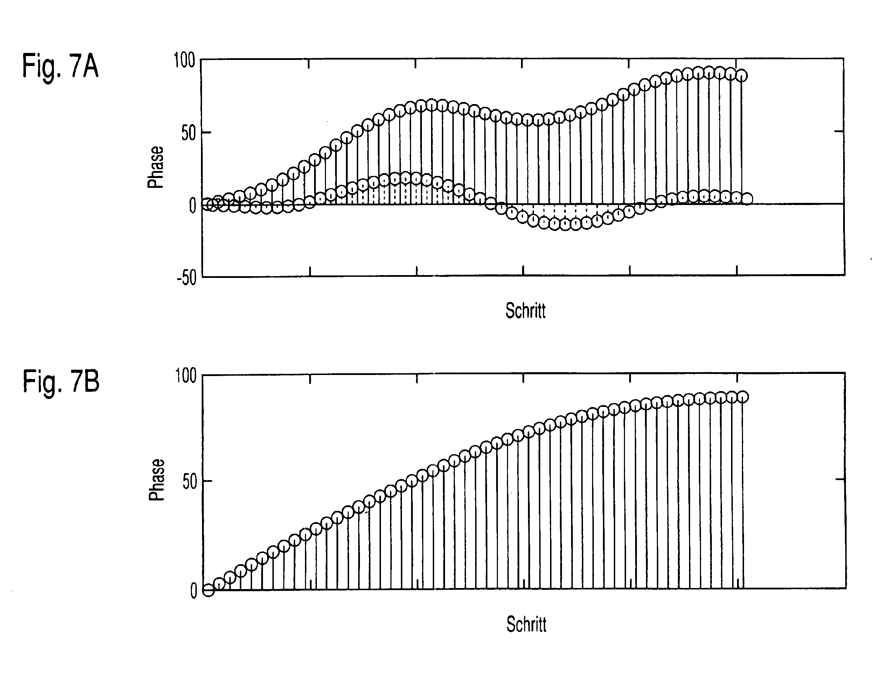

In Fig. 7A ist der Verlauf der gemessenen Frequenz-Offset-kompensierten Phasenwerte $\varphi_{E1i}'$ und $\varphi_{E2i}'$ des Antwortsignals e(t) - durchgezogene Linien in Fig. 7A -, die aus einer Phasenverzerrung aufgrund der AM-PM-Kennlinie und der Phasendrift $\varphi_i$ resultieren, und der Verlauf der einzelnen Phasendriften $\varphi_i$ - gestrichelte Linien in Fig. 7A - dargestellt. Werden die gemessenen Frequenz-Offset-kompensierten Phasenwerte $\varphi_{Eli}'$ und $\varphi_{E2i}'$ des Antwortsignals e (t) gemäß Gleichung (2) von einer Phasendrift $\varphi_i$ befreit, so erhält man den in Fig. 7B dargestellten Verlauf der Frequenz-Offset- und Phasendrift-kompensierten Phasenwerte $\varphi_{Ei}''$, die einzig aus der Phasenverzerrung der AM-PM-Kennlinie des Übertragungsgliedes 14 resultieren.

Im abschließenden Verfahrensschritt S60 wird die AM-PM-Kennlinie des Übertragungsgliedes 14 durch Differenzbildung zwischen den Frequenz-Offset- und Phasendrift-kompensierten Phasenwerte $\varphi_{Ei}''$ und den Phasenwerten $\varphi_{s1i}$ oder $\varphi_{s2i}$ im ersten oder zweiten Verlaufsabschnitt 1i oder 2i des Sendesignals s(t) und anschließende Division durch den jeweiligen Amplitudenwert $|S_{1i}|$ des Testsignals s(t) im ersten Verlaufsabschnitt 1i ermittelt.

Das in Fig. 4 dargestellte Verfahren basiert auf einer Darstellung und Berechnung in Polarkoordinaten (Betrag und Phase). Alternativ kann das Verfahren, insbesondere die Messung des Antwortsignals e(t) - Verfahrensschritt S20 in Fig. 4 - und die Kompensation des Frequenz-Offsets $\Delta\omega$ - Verfahrensschritt S50 in Fig. 4 - , auch in kartesischen Koordinaten (Inphase- und Quadratur-Komponente) durchgeführt werden, wobei im Anschluß zur Bestimmung der AM-AM-und der AM-PM-Kennlinie eine Transformation von IQ-Koordinaten in Polar-Koordinaten erforderlich ist. Auf diese Weise ändert sich die Reihenfolge der einzelnen Verfahrensschritte in Fig. 4 und es tritt ein zusätzlicher Verfahrensschritt einer Koordinaten-Transformation hinzu.

Die Erfindung ist nicht auf die dargestellte Ausführungsform beschränkt. Insbesondere sind die Vermessung anderer nachrichtentechnischer Übertragungsglieder, z. B. Filter, Mischer usw. und andere Übertragungssignale nach anderen Modulations-Verfahren und -Standards von der Erfindung abgedeckt.

**Patentansprüche**

1. Verfahren zur Ermittlung der Amplitude und/oder der Phase des Ausgangssignals eines Übertragungsgliedes in Abhängigkeit der Amplitude des Eingangssignals, indem ein aus einem Testsignal s(t) durch Amplituden- und/oder Phasenverzerrung im Übertragungsglied (14) hervorgegangenes Antwortsignal (e(t)) hinsichtlich des Amplitudenverlaufs ($|e(t)|$) des Antwortsignals (e(t)) und/oder der Phasenverläufe ($\varphi_s(t)$, $\varphi_E(t)$) des Testsignals (s(t)) und des Antwortsignals (e(t)) in eine Abhängigkeit von der Amplitude ($|s(t)|$) des Testsignals(s(t)) ermittelt wird, **dadurch gekennzeichnet,** **dass** der Amplitudenverlauf ($|s(t)|$) des Testsignals (s(t)) aus mehreren ersten und zweiten Verlaufsabschnitten (1i, 2i) mit konstanten Amplitudenwerten ($|s_{1i}|$, $|s_{2i}|$) während der Dauer ($\Delta T$) des jeweiligen ersten oder zweiten Verlaufsabschnitts (1i, 2i) besteht und **dass** entweder die ersten und die zweiten Verlaufsabschnitte (1i, 2i) oder einzig die ersten Verlaufsabschnitte (1i) jeweils voneinander verschiedene Amplitudenwerte aufweisen.

**2.** Verfahren nach Anspruch 1,
**dadurch gekennzeichnet,**
**daß** der Amplitudenverlauf ($|s(t)|$) des Testsignals ($s(t)$) im Wechsel erste Verlaufsabschnitte ($1i$) mit jeweils zueinander veränderten Amplitudenwerten ($|s_{1i}|$) und zweite Verlaufsabschnitte ($2i$) mit jeweils zueinander unveränderten Amplitudenwerten ($|S_{2i}|$) aufweist.

**3.** Verfahren nach Anspruch 2,
**dadurch gekennzeichnet,**
**daß** sich die Amplitudenwerte ($|s_{1i}|$) von aufeinander folgenden ersten Verlaufsabschnitten des Testsignals ($s(t)$) verkleinern.

**4.** Verfahren nach Anspruch 3,
**dadurch gekennzeichnet,**
**daß** die Amplitudenwerte ($|s_{2i}|$) der zweiten Verlaufsabschnitte ($2i$) des Testsignals ($s(t)$) dem größten Amplitudenwert ($|s_{11}|$) der ersten Verlaufsabschnitte ($1i$) des Testsignals ($s(t)$) entsprechen.

**5.** Verfahren nach einem der Ansprüche 2 bis 4,
**dadurch gekennzeichnet,**
**daß** die AM-AM-Kennlinie des Übertragungsgliedes ($14$) aus den Amplitudenwerten ($|s_{1i}|$, $|e_{1i}|$) des Testsignals($s(t)$) und des zugehörigen Antwortsignals ($e(t)$) in den ersten Verlaufsabschnitten ($1i$) ermittelt wird.

**6.** Verfahren nach einem der Ansprüche 2 bis 5,
**dadurch gekennzeichnet,**
**daß** der Phasenverlauf ($\varphi_s(t)$) des Testsignals ($s(t)$) konstante und identische Phasenwerte ($\varphi_{S1i}$, $\varphi_{s2i}$) in allen ersten und zweiten Verlaufsabschnitten ($1i$, $2i$) aufweist.

**7.** Verfahren nach Anspruch 6,
**dadurch gekennzeichnet,**
**daß** die Phasenwerte ($\varphi_{s1i}$, $\varphi_{s2i}$) des Phasenverlauf ($\varphi_s(t)$) des Testsignals ($s(t)$) in allen ersten und zweiten Verlaufsabschnitten ($1i$, $2i$) den Wert Null aufweisen.

**8.** Verfahren nach einem der Ansprüche 2 bis 7,
**dadurch gekennzeichnet,**
**daß** ein nicht Frequenz-Offset-kompensierter Phasenverlauf ($\varphi_E(t)$) des Antwortsignals ($e(t)$) mit konstanten Phasenwerten ($\varphi_{E1i}$, $\varphi_{E2i}$) während der Dauer $\Delta T$) der ersten und zweiten Verlaufsabschnitte ($1i$, $2i$) durch Kompensation eines durchschnittlich auftretenden Frequenz-Offsets ($\Delta\omega_{avg}$) in einen Frequenz-Offset-kompensierten Phasenverlauf ($\varphi_E'(t)$) mit konstanten Phasenwerten ($\varphi_{E1i}'$, $\varphi_{E2i}'$) während der Dauer $\Delta T$) der ersten und zweiten Verlaufsabschnitte ($1i$, $2i$) überführt wird.

**9.** Verfahren nach Anspruch 8,
**dadurch gekennzeichnet,**
**daß** die AM-PM-Kennlinie des Übertragungsgliedes ($14$) aus Differenzen ( ($\varphi_{E1i}'$-$\varphi_{E2i}'$)-$\varphi_{s1i}$, ($<p_{E1i}'$-$\varphi_{E2i}'$)-$\varphi_{s2i}$) der Phasenwertdifferenz ($\varphi_{E1i}'$ -$\varphi_{E2i}'$) aufeinanderfolgender erster und zweiter Verlaufsabschnitte ($1i$, $2i$) des Frequenz-Offset-kompensierten Phasenverlaufs ($\varphi_E'(t)$) des Antwortsignals ($e(t)$) und des Phasenwerts ($\varphi_{s1i}$, $\varphi_{s2i}$) in den ersten oder zweiten Verlaufsabschnitten ($1i$, $2i$) des Phasenverlaufs ($\varphi_s(t)$) des Testsignals ($s(t)$) in Abhängigkeit der Amplitudenwerte ($|s_{1i}|$) des Testsignals ($s(t)$) in den ersten Verlaufsabschnitten ($1i$) ermittelt wird.

**10.** Verfahren nach Anspruch 8,
**dadurch gekennzeichnet,**
**daß** die Amplitudenwerte ($|S_{2i}|$, $|s_{1i}|$) und Phasenwerte ($\varphi_{s1i}$, $\varphi_{E1i}$, $\varphi_{s2i}$, $\varphi_{E2i}$) in den ersten und zweiten Verlaufsabschnitten ($1i$, $2i$) des Testsignals ($s(t)$) und des zugehörigen Antwortsignals ($e(t)$) jeweils in einem Zeitintervall ($\Delta T'$) des ersten und zweiten Verlaufsabschnittes ($1i$, $2i$) ermittelt werden, das gegenüber der Dauer ($\Delta T$) des ersten und zweiten Verlaufsabschnittes ($1i$, $2i$) um jeweils ein Unsicherheitsintervall ($\Delta t'$) am Beginn und am Ende des jeweiligen ersten und zweiten Verlaufsabschnittes ($1i$, $2i$) reduziert ist.

**11.** Verfahren nach Anspruch 8,
**dadurch gekennzeichnet,**
**daß** der durchschnittlich auftretende Frequenz-Offset ($\Delta\omega_{avg}$) durch Mittelwertbildung aus den in den ersten und zweiten Verlaufsabschnitten (1i, 2i) jeweils ermittelten und mit den Amplitudenwerten ($|s_{1i}|$, $|s_{2i}|$) des Testsignals (s(t)) in den ersten und zweiten Verlaufsabschnitten (1i, 2i) gewichteten Frequenz-Offsets ($\Delta\omega_{1i}$, $\Delta\omega_{2i}$) berechnet wird.

**12.** System zur Ermittlung der Amplitude- und/oder der Phase des Ausgangssignals eines Übertragungsgliedes (14) in Abhängigkeit der Amplitude des Eingangssignals, das eine Serienschaltung mit einer Sende-Einheit (15), einem Übertragungsglied (14), das von einem von der Sende-Einheit (15) generierten Testsignal (s(t)) beaufschlagt wird, und einem Meßgerät (12) zur Messung einzig eines aus dem Testsignal (s(t)) durch Amplituden und/oder Phasenverzerrung im Übertragungsglied (14) hervorgegangenen Antwortsignals (e(t)),
**dadurch gekennzeichnet,**
**dass** der Amplitudenverlauf ($|s(t)|$) des Testsignals (s(t)) aus mehreren ersten und zweiten Verlaufsabschnitten (1i, 2i) mit konstanten Amplitudenwerten ($|s_{1i}|$, $|s_{2i}|$) während der Dauer ($\Delta T$) des jeweiligen ersten oder zweiten Verlaufsabschnitts (1i, 2i) besteht und
**dass** entweder die ersten und die zweiten Verlaufsabschnitte (1i, 2i) oder einzig die ersten Verlaufsabschnitte (1i) jeweils voneinander verschiedene Amplitudenwerte aufweisen.

**13.** System nach Anspruch 12,
**dadurch gekennzeichnet,**
**daß** das System darüber hinaus eine Einheit zur übergeordneten Ablaufsteuerung (13) enthält, die mit der Sende-Einheit (15) und dem Meßgerät (12) in Verbindung steht und aus dem Phasen- und/oder Amplitudenverlauf des Testsignals (s(t)) und des Antwortsignals (e(t)) die AM-AM- und/oder AM-PM-Kennlinie des Übertragungsgliedes (14) ermittelt.

**14.** System nach Anspruch 12 oder 13,
**dadurch gekennzeichnet,**
**daß** das Übertragungsglied (14) ein Leistungsverstärker (5) ist, der in einem Polar-Modulator (1) integriert ist.

**Claims**

**1.** Method for determining the amplitude and/or the phase of the output signal of a transmission link dependent upon the amplitude of the input signal in that a response signal (e(t)) resulting from a test signal (s(t)) by amplitude and/or phase distortion in the transmission link (14) is determined with regard to the amplitude response ($|e(t)|$) of the response signal (e(t)) and/or of the phase responses ($\varphi_S(t)$, ($\varphi_E(t)$) of the test signal (s(t)) and of the response signal (e(t)) dependent upon the amplitude ($|s(t)|$) of the test signal (s(t)),
**characterised in that**
the amplitude response ($|s(t)|$) of the test signal (s(t)) consists of several first and second response segments (1i, 2i) with constant amplitude values ($|s_{1i}|$, $|s_{2i}|$) over the duration ($\Delta T$) of the respective first or second response segment (1i, 2i)
and
that, either the first and the second response segments (1i, 2i) or exclusively the first response segments (1i) in each case provide mutually different amplitude values.

**2.** Method according to claim 1,
**characterised in that**
the amplitude response ($|s(t)|$) of the test signal (s(t)) provides alternately first response segments (1i) with amplitude values ($|s_{1i}|$) changed relative to one another and second response segments (2i) with amplitude values ($|s_{2i}|$) unchanged relative to one another.

**3.** Method according to claim 2,
**characterised in that**
the amplitude values ($|s_{1i}|$) of successive first response segments of the test signal (s(t)) diminish.

**4.** Method according to claim 3,
**characterised in that**
the amplitude values ($|s_{2i}|$) of the second response segments (2i) of the test signal (s(t)) correspond to the largest amplitude value ($|s_{1i}|$)of the first response segments (1i) of the test signal (s(t)).

**5.** Method according to any one of claims 2 to 4,

**characterised in that**
the AM-AM characteristic of the transmission link (14) is determined from the amplitude values ($|s_{1i}|$, $|e_{1i}|$) of the test signal (s(t)) and of the associated response signal (e(t)) in the first response segments (1i).

6. Method according to any one of claims 2 to 5,
**characterised in that**
the phase response ($\varphi_s$(t)) of the test signal (s(t)) provides constant and identical phase values ($\varphi_{s1i}$, ($\varphi_{s2i}$) in all first and second response segments (1i, 2i).

7. Method according to claim 6,
**characterised in that**
the phase values ($\varphi_{s1i}$, $\varphi_{s2i}$) of the phase response ($\varphi_s$(t)) of the test signal (s(t)) provide the value zero in all first and second response segments (1i, 2i).

8. Method according to any one of claims 2 to 7,
**characterised in that**
a non-frequency-offset-compensated phase response ($\varphi_s$(t)) of the response signal (e(t)) is transferred with constant phase values ($\varphi_{E1i}$, $\varphi_{E2i}$) over the duration ($\Delta T$) of the first and second response segments (1i,2i) by compensation of a frequency offset ($\Delta\omega_{avg}$) occurring as an average in a frequency-offset-compensated phase response ($\varphi_E'$(t)) with constant phase values ($\varphi_{E1i}'$, $\varphi_{E2i}'$) over the duration ($\Delta T$) of the first and second response segments (1i, 2i).

9. Method according to claim 8,
**characterised in that**
the AM-PM characteristic of the transmission link (14) is determined from the differences (($\varphi_{E1i}'$-$\varphi_{E2i}'$) -$\varphi_{s1i}$, ($\varphi_{E1i}'$ -$\varphi_{E2i}'$) -$\varphi_{s2i}$) of the phase-value difference ($\varphi_{E1i}'$ -$\varphi_{E2i}'$) of successive first and second response segments (1i, 2i) of the frequency-offset-compensated phase response ($\varphi_E'$(t)) of the response signal (e(t)) and of the phase value ($\varphi_{s1i}$, ($\varphi_{s2i}$) in the first or second response segments (1i, 2i) of the phase response ($\varphi_s$(t)) of the test signal (s(t)) dependent upon the amplitude values ($|s_{1i}|$) of the test signal (s(t)) in the first response segments (1i).

10. Method according to claim 8,
**characterised in that**
the amplitude values ($|s_{2i}|$, $|s_{1i}|$) and phase values ($\varphi_{s1i}$, $\varphi_{E1i}$, $\varphi_{s2i}$, $\varphi_{E2i}$) in the first and second response segments (1i, 2i) of the test signal (s(t)) and of the associated response signal (e(t)) are determined respectively within a time interval $\Delta T'$) of the first and second response segment (1i, 2i), which is reduced by comparison with the duration ($\Delta T$) of the first and second response segment (1i,2i) by one uncertainty interval ($\Delta T'$) respectively at the beginning and at the end of each first and second response segment (1i, 2i).

11. Method according to claim 8,
**characterised in that**
the frequency offset ($\Delta\omega_{avg}$) occurring as an average is calculated by forming an average value from the frequency offsets ($\Delta\omega_{1i}$, $\Delta\omega_{2i}$) determined respectively in the first and second response segments (1i, 2i) and weighted with the amplitude values ($|s_{1i}|$, $|s_{2i}|$) of the test signal (s(t)) in the first and second response segments (1i,2i).

12. System for determining the amplitude and/or the phase of the output signal of a transmission link (14) dependent upon the amplitude of the input signal, which provides a series circuit with a transmission unit (15), a transmission link (14), which is provided with a test signal (s(t)) generated by the transmission unit (15), and a measuring device (12) for measuring exclusively a response signal (e(t)) resulting from the test signal (s(t)) by amplitude and/or phase distortion in the transmission link (14),
**characterised in that**
the amplitude response ($|s$(t)$|$) of the test signal (s(t)) consists of several first and second response segments (1i, 2i) with constant amplitude values ($|s_{1i}|$, $|s_{2i}|$) over the duration ($\Delta T$) of the respective first or second response segment (1i, 2i)
and
that either the first and the second response segments (1i, 2i) or exclusively the first response segments (1i) in each case provide mutually different amplitude values.

13. System according to claim 12,
**characterised in that**

the system also contains a unit for superordinate procedural control (13), which is connected to the transmission unit (15) and to the measuring device (12) and determines the AM-AM and/or AM-PM characteristic of the transmission link (14) from the phase and/or amplitude response of the test signal (s(t)) and the response signal (e(t)).

14. System according to claim 12 or 13,
**characterised in that**
the transmission link (14) is a power amplifier (5), which is integrated within a polar modulator (1).

**Revendications**

1. Procédé pour déterminer l'amplitude et/ou la phase du signal de sortie d'un organe de transmission en fonction de l'amplitude du signal d'entrée, par le fait que l'on détermine un signal de réponse (e(t)), qui résulte d'un signal de test (s(t)) par distorsion d'amplitude et/ou distorsion de phase dans l'organe de transmission (14), quant à la variation de l'amplitude ($|e(t)|$) du signal de réponse (e(t)) et/ou des variations de phase ($\varphi_s(t)$, $\varphi_E(t)$) du signal de test (s(t)) et du signal de réponse (e(t)) en une fonction de l'amplitude ($|s(t)|$) du signal de test (s(t)),
**caractérisé en ce que** la variation de l'amplitude ($|s(t)|$) du signal de test (s(t)) est constituée de plusieurs premières et deuxièmes sections de variation (1i, 2i) à valeurs d'amplitude ($|s_{1i}|$, $|s_{2i}|$) constantes pendant la durée ($\Delta T$) respectivement de la première ou de la deuxième section de variation (1i, 2i), et
**en ce que**, soit les premières et les deuxièmes sections de variation (1i, 2i), soit seules les premières sections de variation (1i) présentent des valeurs d'amplitude respectivement différentes les unes des autres.

2. Procédé selon la revendication 1,
**caractérisé en ce que** la variation d'amplitude ($|s(t)|$) du signal de test (s(t)) présente de manière alternée des premières sections de variation (1i) avec respectivement des valeurs d'amplitude ($|s_{1i}|$) changées les unes par rapport aux autres, et des deuxièmes sections de variation (2i) avec respectivement des valeurs d'amplitude ($|s_{2i}|$) inchangées les unes par rapport aux autres.

3. Procédé selon la revendication 2,
**caractérisé en ce que** les valeurs d'amplitude ($|s_{1i}|$) de premières sections de variation, successives, du signal de test (s(t)) diminuent.

4. Procédé selon la revendication 3,
**caractérisé en ce que** les valeurs d'amplitude ($|s_{2i}|$) des deuxièmes sections de variation (2i) du signal de test (s(t)) correspondent à la valeur d'amplitude ($|s_{1i}|$) la plus grande des premières sections de variation (1i) du signal de test (s(t)).

5. Procédé selon l'une des revendications 2 à 4,
**caractérisé en ce que** l'on détermine la courbe caractéristique AM-AM de l'organe de transmission (14) à partir des valeurs d'amplitude ($|s_{1i}|$, $|e_{1i}|$) du signal de test (s(t)) et du signal de réponse (e(t)) dans les premières sections de variation (1i).

6. Procédé selon l'une des revendications 2 à 5,
**caractérisé en ce que** la variation de phase ($\varphi_s(t)$) du signal de test (s(t)) présente des valeurs de phase ($\varphi_{s1i}$, $\varphi_{s2i}$) constantes et identiques dans toutes les premières et deuxièmes sections de variation (1i, 2i).

7. Procédé selon la revendication 6,
**caractérisé en ce que** les valeurs de phase ($\varphi_{s1i}$, $\varphi_{s2i}$) de la variation de phase ($\varphi_s(t)$) du signal de test (s(t)) présentent la valeur zéro dans toutes les premières et deuxièmes sections de variation (1i, 2i).

8. Procédé selon l'une des revendications 2 à 7,
**caractérisé en ce qu'**une variation de phase ($\varphi_E(t)$) non compensée en offset de fréquence du signal de réponse (e(t)), avec des valeurs de phase ($\varphi_{E1i}$, $\varphi_{E2i}$) constantes pendant la durée ($\Delta T$) des premières et deuxièmes sections de variation (1i, 2i), est convertie, par compensation d'un offset de fréquence ($\Delta\omega_{avg}$) apparaissant en moyenne, en une variation de phase ($\varphi_E'(t)$) compensée en offset de fréquence, avec des valeurs de phase ($\varphi_{E1i}'$, $\varphi_{E2i}'$) constantes pendant la durée ($\Delta T$) des premières et deuxièmes sections de variation (1i, 2i).

9. Procédé selon la revendication 8,

**caractérisé en ce que** l'on détermine la courbe caractéristique AM-PM de l'organe de transmission (14) à partir de différences $((\varphi_{E1i'}-\varphi_{E2i'}) -\varphi_{s1i}, (\varphi_{E1i}' -\varphi_{E2i}') -\varphi_{s2i})$ de la différence de valeur de phase $(\varphi_{E1i}' -\varphi_{E2i}')$ de premières et deuxièmes sections de variation (1i, 2i) successives de la variation de phase $(\varphi_E' (t))$ compensée en offset de fréquence du signal de réponse (e(t)), et de la valeur de phase $(\varphi_{s1i}, \varphi_{s2i})$ dans les premières et deuxièmes sections de variation (1i, 2i) de la variation de phase $(\varphi_s(t))$ du signal de test (s(t)) en fonction des valeurs d'amplitude $(|s_{1i}|)$ du signal de test (s(t)) dans les premières sections de variation (1i).

10. Procédé selon la revendication 8,
**caractérisé en ce que** l'on détermine les valeurs d'amplitude $(|s_{2i}|, |S_{1i}|)$ et les valeurs de phase $(\varphi_{s1i}, \varphi_{E1i}, \varphi_{s2i}, \varphi_{E2i})$ dans les premières et deuxièmes sections de variation (1i, 2i) du signal de test (s(t)) et du signal de réponse (e(t)) associé, respectivement dans un intervalle de temps $(\Delta T')$ de la première et deuxième section de variation (1i, 2i), qui, par rapport à la durée $(\Delta T)$ de la première et de la deuxième section de variation (1i, 2i), est réduit respectivement d'un intervalle d'incertitude $(\Delta t')$ au début et à la fin de la première et deuxième section de variation (1i, 2i) respective.

11. Procédé selon la revendication 8,
**caractérisé en ce que** l'offset de fréquence $(\Delta\omega_{avg})$ apparaissant en moyenne, est calculé en formant une valeur moyenne à partir des offsets de fréquence $(\Delta\omega_{1i}, \Delta\omega_{2i})$ déterminés respectivement dans les premières et deuxièmes sections de variation (1i, 2i) et pondérés avec les valeurs d'amplitude $(|s_{1i}|, |s_{2i}|)$ du signal de test (s(t)) dans les premières et deuxièmes sections de variation (1i, 2i).

12. Système pour déterminer l'amplitude et/ou la phase du signal de sortie d'un organe de transmission (14) en fonction de l'amplitude du signal d'entrée, qui comprend un circuit série avec une unité d'émission (15), un organe de transmission (14) alimenté par un signal de test (s(t)) généré par l'unité d'émission (15), et un appareil de mesure (12) pour mesurer uniquement un signal de réponse (e(t)) résultant du signal de test (s(t)) par distorsion d'amplitude et/ou de phase dans l'organe de transmission (14),
**caractérisé en ce que** la variation de l'amplitude $(|s(t)|)$ du signal de test (s(t)) est constituée de plusieurs premières et deuxièmes sections de variation (1i, 2i) à valeurs d'amplitude $(|s_{1i}|, |s_{2i}|)$ constantes pendant la durée $(\Delta T)$ respectivement de la première ou de la deuxième section de variation (1i, 2i), et
**en ce que**, soit les premières et les deuxièmes sections de variation (1i, 2i), soit seules les premières sections de variation (1i) présentent des valeurs d'amplitude respectivement différentes les unes des autres.

13. Système selon la revendication 12,
**caractérisé en ce que** le système renferme, en outre, une unité de commande de processus de supervision (13), qui est en liaison avec l'unité d'émission (15) et avec
l'appareil de mesure (12), et détermine, à partir de la variation de phase et/ou d'amplitude du signal de test (s(t)) et du signal de réponse (e(t)), la courbe caractéristique AM-AM et/ou AM-PM de l'organe de transmission (14).

14. Système selon la revendication 12 ou la revendication 13,
**caractérisé en ce que** l'organe de transmission (14) est un amplificateur de puissance (5), qui est intégré à un modulateur polaire (1).

Fig. 1

Fig. 2

Fig. 3

Fig. 4

EP 1 882 321 B1

$\dfrac{|s(t)|}{|e(t)|}$

t

$\dfrac{\varphi_S(t)}{\varphi_E(t)}$

$\varphi_E{'}(t)$

t

$\Delta T'$

$\Delta T$

$\Delta t'$

$\Delta t'$

Q I

Q I

Q I

Q I

Q I

Q I

Q I

Q I

Q I

Q I

Fig. 5

Fig. 6A

Fig. 6B

EP 1 882 321 B1

Fig. 7A

Fig. 7B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9905784 A1
- US 20020168023 A
- WO 03043182 A